# EUROPEAN PATENT APPLICATION

(11) **EP 4 800 533 A1**
(43) Date of publication of application: **02.09.2026**
(21) Application number: 24881225.7
(22) Date of filing: 21.08.2024
(51) Int. Cl.: G06F 3/0481, H04N 21/431

(54) **VIDEO-BASED INTERACTION METHOD, APPARATUS, AND DEVICE, AND STORAGE MEDIUM**

(30) Priority: 27.10.2023 CN 202311415416
(71) Applicant: Beijing Zitiao Network Technology Co., Ltd., Beijing 100190 (CN)
(72) Inventor: WANG, Yifan, Beijing 100028 (CN); GONG, Shuai, Beijing 100028 (CN); GENG, Xi, Beijing 100028 (CN); GAO, Zhenhua, Beijing 100028 (CN)
(74) Representative: Isarpatent
(86) International application number: PCT/CN2024/113717
(87) International publication number: WO 2025/086857

(57) **Abstract**

The present disclosure provides a video-based interaction method, apparatus, and device, and a storage medium. The method comprises: displaying a video playback interface; in response to a display trigger operation for a target function interface acting on the video playback interface, displaying the target function interface; and displaying a preset video playback window on the target function interface, and, on the basis of playback progress information of a first video, continuing to play the first video in the preset video playback window, the preset video playback window supporting switching and playback of a video on the basis of a multimedia information stream.

## Description

### CROSS-REFERENCE TO RELATED APPLICATION(S)

The present application claims priority to Chinese Patent Application No. 202311415416.5, filed on October 27, 2023 and entitled "VIDEO-BASED INTERACTION METHOD, APPARATUS, AND DEVICE, AND STORAGE MEDIUM", which is incorporated herein by reference in its entirety.

### FIELD

The present disclosure relates to the field of data processing, and in particular to a video-based interaction method, apparatus, and device, and a storage medium.

### BACKGROUND

Currently, with the development of internet technologies, users have increasingly diversified requirements for video-related functions.

Therefore, how to meet the users' diversified requirements for video-related functions has become a technical problem that needs to be addressed urgently.

### SUMMARY

To solve the above technical problem, an embodiment of the present disclosure provides a video-based interaction method.

According to a first aspect, the present disclosure provides a video-based interaction method. The method includes:
displaying a video playback interface, where a first video is played on the video playback interface, the first video belonging to a multimedia information stream;
in response to a display trigger operation for a target function interface that is performed on the video playback interface, displaying the target function interface, where the target function interface is used to receive an interaction operation for a target function; and
displaying a preset video playback window on the target function interface, and continuing playback of the first video within the preset video playback window based on playback progress information of the first video, where a display area of the preset video playback window is less than that of the target function interface, and the preset video playback window supports switching video playback based on the multimedia information stream.

In an optional implementation, the method further includes:
closing the preset video playback window in response to a window closing operation performed on the target function interface.

In an optional implementation, displaying the preset video playback window on the target function interface includes:
displaying the preset video playback window on the target function interface in response to a window opening operation performed on the target function interface.

In an optional implementation, the method further includes:
in response to an interface exit operation performed on the target function interface, displaying the video playback interface, and continuing video playback on the video playback interface based on the video playback progress information within the preset video playback window.

In an optional implementation, the method further includes:
in response to a preset split-screen operation performed on the target function interface, displaying the target function interface in a first display region, and displaying the preset video playback window in a second display region, where the first display region and the second display region are independent of each other and do not overlap each other.

In an optional implementation, the method further includes:
in response to a first target interaction operation performed on the target function interface, displaying an operation response interface corresponding to the first target interaction operation in full screen, and hiding the preset video playback window.

In an optional implementation, the method further includes:
in response to a second target interaction operation performed on the target function interface, displaying an operation response interface corresponding to the second target interaction operation in the first display region, and controlling video playback within the preset video playback window to be paused.

In an optional implementation, the target function interface includes at least one of a message display interface, a product object obtaining interface, a chat interface, or a mailbox interface.

According to a second aspect, the present disclosure provides a video-based interaction apparatus. The apparatus includes:
a first display module configured to display a video playback interface, where a first video is played on the video playback interface, the first video belonging to a multimedia information stream;
a second display module configured to, in response to a display trigger operation for a target function interface that is performed on the video playback interface, display the target function interface, where the target function interface is used to receive an interaction operation for a target function; and
a third display module configured to display a preset video playback window on the target function interface, and continue playback of the first video within the preset video playback window based on playback progress information of the first video, where a display area of the preset video playback window is less than that of the target function interface, and the preset video playback window supports switching video playback based on the multimedia information stream.

According to a third aspect, the present disclosure provides a computer-readable storage medium, where the computer-readable storage medium stores instructions therein, and the instructions, when executed on a terminal device, cause the terminal device to implement the method described above.

According to a fourth aspect, the present disclosure provides a video-based interaction device. The device includes: a memory, a processor, and a computer program that is stored on the memory and executable on the processor, where the processor, when executing the computer program, implements the method described above.

According to a fifth aspect, the present disclosure provides a computer program product. The computer program product includes a computer program/instruction. The computer program/instruction, when executed by a processor, causes the method described above to be implemented.

Compared to the prior art, the technical solutions provided in the embodiments of the present disclosure have at least the following advantages:

The embodiments of the present disclosure provide a video-based interaction apparatus. The video playback interface is displayed first, where the first video is played on the video playback interface, the first video belonging to the multimedia information stream; in response to the display trigger operation for the target function interface that is performed on the video playback interface, the target function interface is displayed, where the target function interface is used to receive the interaction operation for the target function; and the preset video playback window is displayed on the target function interface, and the playback of the first video is continued within the preset video playback window based on the playback progress information of the first video, where the display area of the preset video playback window is less than that of the target function interface, and the preset video playback window supports switching video playback based on the multimedia information stream.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a flowchart of a video-based interaction method according to an embodiment of the present disclosure;
FIG. 2 is a schematic diagram of a video playback interface according to an embodiment of the present disclosure;
FIG. 3 is a schematic diagram of a message display interface according to an embodiment of the present disclosure;
FIG. 4 is a schematic diagram of a split-screen interface according to an embodiment of the present disclosure;
FIG. 5 is a schematic diagram of another split-screen interface according to an embodiment of the present disclosure;
FIG. 6 is a schematic diagram of another split-screen interface according to an embodiment of the present disclosure;
FIG. 7 is a schematic structural diagram of a video-based interaction apparatus according to an embodiment of the present disclosure; and
FIG. 8 is a schematic structural diagram of a video-based interaction device according to an embodiment of the present disclosure.

### DETAILED DESCRIPTION OF EMBODIMENTS

For a clearer understanding of the above objectives, features and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

Currently, with the development of Internet technologies, users have increasingly diversified requirements for video-related functions. Therefore, how to meet the users' diversified requirements for video-related functions has become a technical problem that needs to be addressed urgently.

To this end, the embodiments of the present disclosure provide a video-based interaction apparatus. A video playback interface is displayed first, where a first video is played on the video playback interface, the first video belonging to the multimedia information stream; in response to a display trigger operation for a target function interface that is performed on the video playback interface, the target function interface is displayed, where the target function interface is used to receive an interaction operation for a target function; and a preset video playback window is displayed on the target function interface, and playback of the first video is continued within the preset video playback window based on the playback progress information of the first video, where a display area of the preset video playback window is less than that of the target function interface, and the preset video playback window enables switching video playback based on the multimedia information stream.

It can be learned that by triggering the display of the target function interface on the video playback interface, the embodiments of the present disclosure enable a function of continuing playback of the video on the video playback interface in the form of a small window on the target function interface, thereby enabling an interaction operation to be triggered for the target function based on the target function interface, and also supporting playback of the video within the small window. Therefore, the embodiments of the present disclosure allow for enriched video-related functions, thereby improving the user experience.

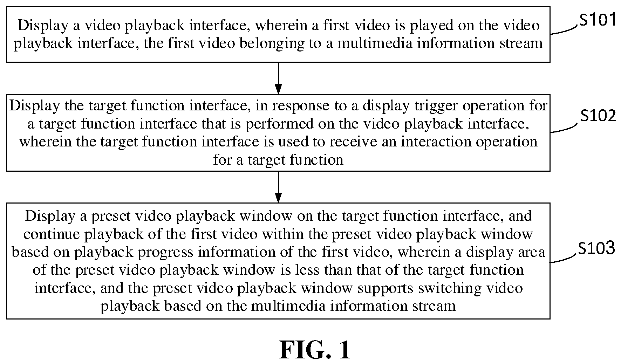

On this basis, an embodiment of the present disclosure provides a video-based interaction method. FIG. 1 is a flowchart of a video-based interaction method according to an embodiment of the present disclosure. The method specifically includes the following steps.

S101: A video playback interface is displayed. A first video is played on the video playback interface, the first video belonging to a multimedia information stream.

The interaction-based interaction method provided in the embodiment of the present disclosure is applicable to a client. For example, the client may include a client deployed on a smartphone, a client deployed on a tablet computer, a client deployed on a large-screen device, etc. In the embodiments of the present disclosure, a client deployed on a large-screen device is used as an example.

In the embodiment of the present disclosure, the first video is played on the video playback interface. The first video may be a video that is played based on any multimedia information stream, that is, the first video belongs to the multimedia information stream.

S102: In response to a display trigger operation for a target function interface that is performed on the video playback interface, the target function interface is displayed.

The target function interface is used to receive an interaction operation for a target function.

In the embodiment of the present disclosure, the display trigger operation for the target function interface being used to trigger display of the target function interface may include triggering a preset control on the video playback interface to trigger the display of the target function interface, where the preset control may include a tab displayed on the video playback interface, that is, the tab is triggered to switch the currently displayed video playback interface to the target function interface for display.

The target function interface may support triggering the interaction operation for the target function.

In an optional implementation, the target function interface may include at least one of a message display interface, a product object obtaining interface, a chat interface, or a mailbox interface.

The product object obtaining interface may include a mall interface.

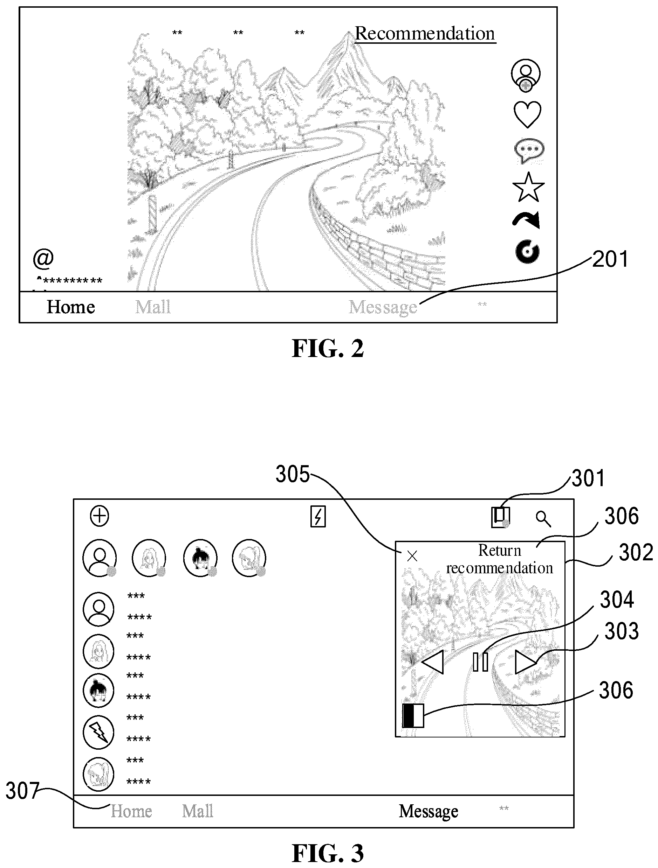

FIG. 2 is a schematic diagram of a video playback interface according to an embodiment of the present disclosure. On the video playback interface, the first video is played and a message tab 201 is displayed. When a trigger operation for the message tab 201 that is performed on the video playback interface is received, the video playback interface is switched to the message display interface for display. FIG. 3 is a schematic diagram of a message display interface according to an embodiment of the present disclosure.

S103: A preset video playback window is displayed on the target function interface, and playback of the first video is continued within the preset video playback window based on playback progress information of the first video.

A display area of the preset video playback window is less than that of the target function interface, and the preset video playback window supports switching video playback based on the multimedia information stream.

In the embodiment of the present embodiment, during display of the target function interface, the preset video playback window is displayed on the target function interface. In an optional implementation, when the video playback interface is switched to the target function interface for display, the preset video playback window is opened by default on the target function interface, and playback of the first video is continued within the preset video playback window based on the playback progress information of the first video.

In another optional implementation, when the video playback interface is switched to the target function interface for display, the preset video playback window is closed by default on the target function interface. In response to a window opening operation performed on the target function interface, the preset video playback window is displayed on the target function interface, and playback of the first video is continued within the preset video playback window based on the playback progress information of the first video. Specifically, when the window opening operation performed on the target function interface is received, the preset video playback window is displayed on the target function interface.

The window opening operation may include an opening trigger operation for a window control on the target function interface, etc.

In an optional implementation, using an example in which the target function interface is the message display interface, a window control in a closed state is displayed on the message display interface. When a trigger operation for the window control is received, the preset video playback window is displayed on the message display interface, and playback of the first video is continued within the preset video playback window based on the playback progress information of the first video. In this case, the state of the window control is switched from the closed state to an opened state. The window control in the opened state is configured to indicate that the preset video playback window is being displayed on the target function interface.

During playback of the first video within the preset video playback window, it is also possible to trigger, for the video played within the preset video playback window, switching video playback based on the multimedia information stream.

In an optional implementation, a video switching control is displayed on the preset video playback window. Through the video switching control, switching to a previous video or a next video of the first video for playback is triggered. In addition, a video switch control may be displayed on the preset video playback window. By triggering the video switch control, the video playback within the preset video playback window may be controlled to be paused or continued.

In another optional implementation, the video playback within the preset video playback window on the target function interface may be automatically and continuously switched, such that after the playback of the first video ends, the first video may be automatically switched to the next video for playback based on the multimedia information stream.

As shown in the message display interface of FIG. 3, a preset video playback window 302 is displayed on the message display interface. Playback of the first video is continued within the preset video playback window based on the playback progress information of the first video, and a video switching control 303 and a video switch control 304 are displayed on the preset video playback window. When a trigger operation of the user on the video switching control is received, switching of video playback within the preset video playback window based on the multimedia information stream is triggered.

Based on the embodiments described above, the embodiment of the present disclosure makes it also possible to switch the video playback interface to the mall interface for display by triggering a mall tab displayed on the video playback interface. Specifically, when a trigger operation for the mall tab that is performed on the video playback interface is received, the video playback interface is switched to the mall interface for display, where the preset video playback window is displayed on the mall interface, and playback of the first video is continued within the preset video playback window based on the playback progress information of the first video. In the video-based interaction method provided in the embodiment of the present disclosure, the video playback interface is displayed first, where the first video is played on the video playback interface, the first video belonging to the multimedia information stream; in response to the display trigger operation for the target function interface that is performed on the video playback interface, the target function interface is displayed, where the target function interface is used to receive the interaction operation for the target function; and the preset video playback window is displayed on the target function interface, and the playback of the first video is continued within the preset video playback window based on the playback progress information of the first video, where the display area of the preset video playback window is less than that of the target function interface, and the preset video playback window supports switching video playback based on the multimedia information stream.

It can be learned that by triggering the display of the target function interface on the video playback interface, the embodiments of the present disclosure enable a function of continuing playback of the video on the video playback interface in the form of a small window on the target function interface, thereby enabling an interaction operation to be triggered for the target function based on the target function interface, and also supporting playback of the video within the small window. Therefore, the embodiments of the present disclosure allow for enriched video-related functions, thereby improving the user experience.

During playback of the first video within the preset video playback window on the target function interface, the preset video playback window may also be triggered to be closed through a window closing operation performed on the target function interface.

In an optional implementation, the window closing operation performed on the target function interface includes a trigger operation on a close control on the preset video playback window on the target function interface. Specifically, the close control is displayed on the preset video playback window on the target function interface, and the preset video playback window is closed when the trigger operation on the close control is received.

In another optional implementation, the window closing operation performed on the target function interface includes a trigger operation on the window control on the target function interface that is in an opened state. Specifically, through the window control displayed on the target function interface, at which time the window control is in the opened state, the preset video playback window is closed when the trigger operation on the window control is received.

As shown in the message display interface of FIG. 3 above, the preset video playback window 302 is displayed on the message display interface, and a close control 305 is displayed on the preset video playback window 302. When a trigger operation on the close control is received, the preset video playback window is closed. In addition, a window control 301 in an opened state is further displayed on the message display interface. When a trigger operation on the window control is received, the preset video playback window is closed.

In addition, the preset video playback window may be triggered to be closed based on an interaction operation on the target function interface. Optionally, using an example in which the target function interface is the message display interface, the user triggers a chat details interface for display through a trigger operation on the message display interface. When a trigger operation for video sharing information that is performed on the chat details interface is received, a video sharing information display interface is displayed, and the preset video playback window is closed at this time, where the video sharing information may include message(s) based on multimedia resources on the chat details interface, for example, video(s). In another optional implementation, when a trigger operation for a user avatar that is performed on the chat details interface is received, a user profile interface corresponding to the user avatar is displayed, and the preset video playback window is closed at this time.

By supporting closure of the preset video playback window, users' diversified requirements are met, thereby further improving the user experience.

In practical applications, in order to support exit from the target function interface and also support continued video playback on the video playback interface based on the video playback progress information within the preset video playback window while displaying the video playback interface after exiting the target function interface, the embodiment of the present disclosure enables configuration of an interface exit operation on the target function interface to support the continued video playback based on the video playback progress information within the preset video playback window while exiting the target function interface.

Specifically, when an interface exit operation performed on the target function interface is received, the video playback interface is displayed, and video playback is continued on the video playback interface based on the video playback progress information within the preset video playback window.

The interface exit operation being used to trigger exit from the target function interface and display of the video playback interface may include triggering a back control on the preset video playback window to trigger exit from the current target function interface and display of the video playback interface, and continuing video playback on the video playback interface. Alternatively, it may further include switching the currently displayed target function interface to the video playback interface for display through a tab displayed on the target function interface, that is, by triggering the tab, and continuing video playback on the video playback interface.

As shown in the message display interface of FIG. 3 above, the preset video playback window 302 is displayed on the message display interface, and a back control 306 is displayed on the preset video playback window 302. When a trigger operation on the back control is received, the video playback interface is displayed, and video playback is continued on the video playback interface. In addition, a home tab 307 is further displayed on the message display interface. When a trigger operation for the home tab 307 is received, the current message display interface is switched to the video playback interface for display, and video playback is continued on the video playback interface.

In practical applications, in order to make the target function interface more interactive, a preset split-screen operation may also be set on the target function interface based on the preset video playback window. That is, two interfaces of the same application are displayed on a single screen at the same time, in order to support the user's need to browse the video while performing interaction. Specifically, the preset split-screen operation may be set on the target function interface.

In an optional implementation, when the preset split-screen operation performed on the target function interface is received, the target function interface is displayed in a first display region, and the preset video playback window is displayed in a second display region, where the first display region and the second display region are independent of each other and do not overlap each other.

The preset split-screen operation may include triggering a split-screen function for a preset split-screen control.

As shown in the message display interface of FIG. 3 above, a preset split-screen control 306 is displayed on the preset video playback window 302 displayed on the message display interface. When a trigger operation for the preset split-screen control is received, the message display interface is displayed in the first display region, and the preset video playback window is displayed in the second display region, where the first display region and the second display region are independent of each other and do not overlap each other.

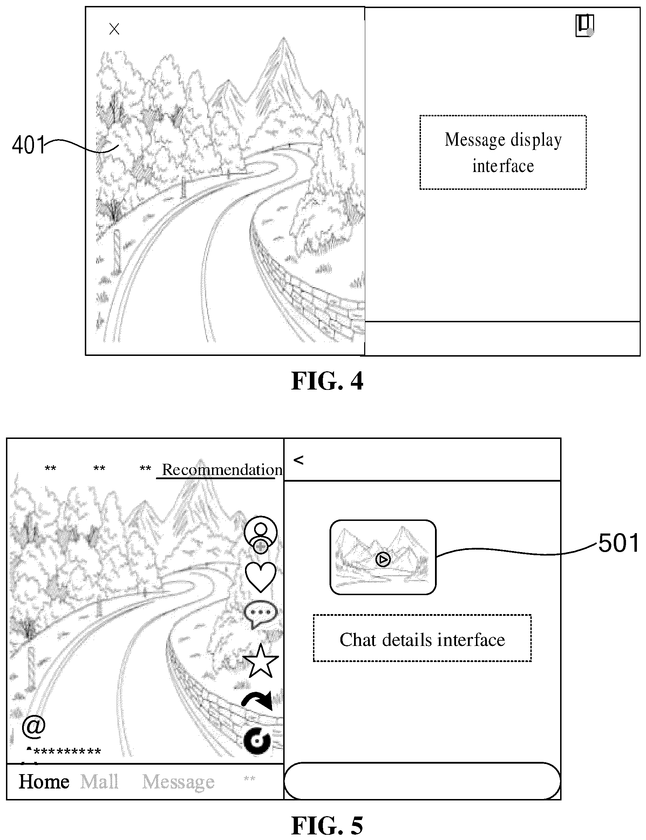

FIG. 4 is a schematic diagram of a split-screen interface according to an embodiment of the present disclosure. Using an example in which the target function interface is the message display interface, the message display interface is displayed in the first display region, and a preset video playback window 401 is displayed in the second display region, where the first display region and the second display region are independent of each other and do not overlap each other.

During display of the target function interface and the preset video playback window to the user in split screen, the embodiment of the present disclosure further supports adjusting the area occupied by the display region. Specifically, the area occupied by the display region is adjusted by dragging a border of the display region.

It should be noted that in the process of adjusting the area occupied by the display region, if the occupied area is adjusted to a certain area size, the display region corresponding to the occupied area may be triggered to be in a closed or full-screen state, while the other display region corresponds to a full-screen or closed state.

In the embodiment of the present disclosure, after the target function interface and the preset video playback window are displayed in split screen, performing an interaction operation on the target function interface and the preset video playback window is also supported.

Specifically, when the split-screen operation is a split-screen operation implemented based on the same application, that is, a single application is started, and a target function interface and a preset video playback window in the application are displayed in split screen, namely, in-application split-screen. When a first target interaction operation performed on the target function interface is received, an operation response interface corresponding to the first target interaction operation is displayed in full screen, and the preset video playback window is hidden.

The first target interaction operation may include a preset interaction operation for the target function interface.

When the split-screen operation is a split-screen operation implemented based on starting two identical applications, namely, out-of-application split-screen, that is, when a second target interaction operation performed on the target function interface is received, an operation response interface corresponding to the target interaction operation is displayed in the first display region, and video playback on the video playback interface is controlled to be paused. That is, after the target function interface and the video playback interface are displayed in split screen, when the user triggers the second target interaction operation for the target function interface, video playback on the video playback interface is controlled to be paused.

In the content described above, the first target interaction operation and the second target interaction operation may be the same or different, and both are interaction operations triggered by the user based on the target function interface.

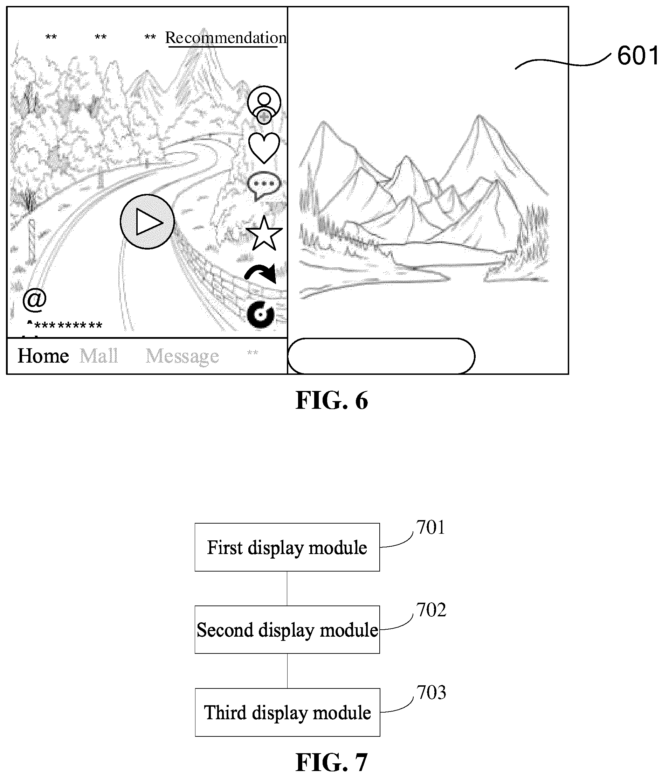

FIG. 5 is a schematic diagram of a split-screen interface according to an embodiment of the present disclosure. The chat details interface is displayed in a first display region of the split-screen interface, and the video playback interface is displayed in a second display region thereof, where video sharing content 501 is displayed on the chat details interface. When the user triggers a display operation for the video sharing content, a video sharing content display interface is displayed in the first display region. In this case, the video on the video playback interface is in a paused state. For example, FIG. 6 is a schematic diagram of another split-screen interface according to an embodiment of the present disclosure. An operation response interface 601 corresponding to the target interaction operation is displayed in the first display region of the split-screen interface, and the video playback interface is displayed in the second display region thereof. In this case, the video on the video playback interface is in a paused state.

Based on the above-mentioned method embodiment, the present disclosure further provides a video-based interaction apparatus. FIG. 7 is a schematic structural diagram of a video-based interaction apparatus according to an embodiment of the present disclosure. The apparatus includes:
a first display module 701 configured to display a video playback interface, where a first video is played on the video playback interface, the first video belonging to a multimedia information stream;
a second display module 702 configured to, in response to a display trigger operation for a target function interface that is performed on the video playback interface, display the target function interface, where the target function interface is used to receive an interaction operation for a target function; and
a third display module 703 configured to display a preset video playback window on the target function interface, and continue playback of the first video within the preset video playback window based on playback progress information of the first video, where a display area of the preset video playback window is less than that of the target function interface, and the preset video playback window supports switching video playback based on the multimedia information stream.

In an optional implementation, the apparatus further includes:
a closing module configured to close the preset video playback window in response to a window closing operation performed on the target function interface.

In an optional implementation, the third display module is specifically configured to:
display the preset video playback window on the target function interface in response to a window opening operation performed on the target function interface.

In an optional implementation, the apparatus further includes:
a fourth display module configured to, in response to an interface exit operation performed on the target function interface, display the video playback interface, and continue video playback on the video playback interface based on the video playback progress information within the preset video playback window.

In an optional implementation, the apparatus further includes:
a fifth display module configured to, in response to a preset split-screen operation performed on the target function interface, display the target function interface in a first display region, and display the preset video playback window in a second display region, where the first display region and the second display region are independent of each other and do not overlap each other.

In an optional implementation, the apparatus further includes:
a sixth display module configured to, in response to a first target interaction operation performed on the target function interface, display an operation response interface corresponding to the first target interaction operation in full screen, and hide the preset video playback window.

In an optional implementation, the apparatus further includes:
a seventh display module configured to, in response to a second target interaction operation performed on the target function interface, display an operation response interface corresponding to the second target interaction operation in the first display region, and control video playback within the preset video playback window to be paused.

In an optional implementation, the target function interface includes at least one of a message display interface, a product object obtaining interface, a chat interface, or a mailbox interface.

In the video-based interaction apparatus provided in the embodiment of the present disclosure, The video playback interface is displayed first, where the first video is played on the video playback interface, the first video belonging to the multimedia information stream; in response to the display trigger operation for the target function interface that is performed on the video playback interface, the target function interface is displayed, where the target function interface is used to receive the interaction operation for the target function; and the preset video playback window is displayed on the target function interface, and the playback of the first video is continued within the preset video playback window based on the playback progress information of the first video, where the display area of the preset video playback window is less than that of the target function interface, and the preset video playback window supports switching video playback based on the multimedia information stream.

It can be learned that by triggering the display of the target function interface on the video playback interface, the embodiments of the present disclosure enable a function of continuing playback of the video on the video playback interface in the form of a small window on the target function interface, thereby enabling an interaction operation to be triggered for the target function based on the target function interface, and also supporting playback of the video within the small window. Therefore, the embodiments of the present disclosure allow for enriched video-related functions, thereby improving the user experience.

In addition to the method and apparatus described above, an embodiment of the present disclosure further provides a computer-readable storage medium having instructions stored therein. The instructions, when run on a terminal device, cause the terminal device to implement the video-based interaction method described in the embodiments of the present disclosure.

An embodiment of the present disclosure further provides a computer program product. The computer program product includes a computer program or instructions. The computer program or instructions, when executed by a processor, cause the video-based interaction method described in the embodiments of the present disclosure to be implemented.

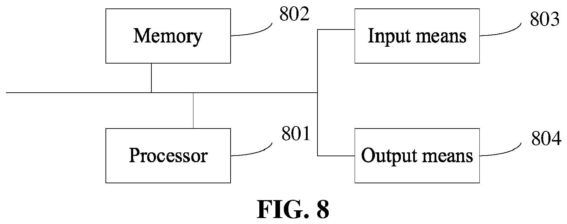

In addition, an embodiment of the present disclosure further provides a video-based interaction device, as shown in FIG. 8. The device may include:
a processor 801, a memory 802, an input means 803, and an output means 804. There may be one or more processors 801 in the video-based interaction device. For example, there is one processor in FIG. 8. In some embodiments of the present disclosure, the processor 801, the memory 802, the input means 803, and the output means 804 may be connected through a bus or in another manner, for example, are connected through the bus in FIG. 8.

The memory 802 may be configured to store a software program and a module. The processor 801 performs various functional applications of the video-based interaction device and processes data by running the software program and the module stored in the memory 802. The memory 802 may mainly include a program storage area and a data storage area. The program storage area may store an operating system, an application required by at least one function, and the like. In addition, the memory 802 may include a highspeed random-access memory, and may further include a non-volatile memory, such as at least one magnetic disk storage device, a flash memory device, or other volatile solid-state storage devices. The input means 803 may be configured to receive entered numerical or character information, and generate a signal input related to a user setting and function control of the video-based interaction device.

Specifically, in this embodiment, the processor 801 loads an executable file corresponding to a process of one or more applications into the memory 802 in accordance with the following instructions, and the processor 801 runs the application stored in the memory 802, to implement various functions of the above video-based interaction device.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. A video-based interaction method, comprising:
displaying a video playback interface, wherein a first video is played on the video playback interface, the first video belonging to a multimedia information stream;
in response to a display trigger operation for a target function interface that is performed on the video playback page, displaying the target function interface, wherein the target function interface is used to receive an interaction operation for a target function; and
displaying a preset video playback window on the target function interface, and continuing playback of the first video within the preset video playback window based on playback progress information of the first video, wherein a display area of the preset video playback window is less than that of the target function interface, and the preset video playback window supports switching video playback based on the multimedia information stream.

2. The method according to claim 1, wherein the method further comprises:
closing the preset video playback window in response to a window closing operation performed on the target function interface.

3. The method according to claim 1, wherein displaying the preset video playback window on the target function interface comprises:
displaying the preset video playback window on the target function interface in response to a window opening operation performed on the target function interface.

4. The method according to claim 1, wherein the method further comprises:
in response to an interface exit operation performed on the target function interface, displaying the video playback interface, and continuing video playback on the video playback interface based on the video playback progress information within the preset video playback window.

5. The method according to claim 1, wherein the method further comprises:
in response to a preset split-screen operation performed on the target function interface, displaying the target function interface in a first display region, and displaying the preset video playback window in a second display region, wherein the first display region and the second display region are independent of each other and do not overlap each other.

6. The method according to claim 5, wherein the method further comprises:
in response to a first target interaction operation performed on the target function interface, displaying an operation response interface corresponding to the first target interaction operation in full screen, and hiding the preset video playback window.

7. The method according to claim 5, wherein the method further comprises:
in response to a second target interaction operation performed on the target function interface, displaying an operation response interface corresponding to the second target interaction operation in the first display region, and controlling video playback within the preset video playback window to be paused.

8. The method according to claim 1, wherein the target function interface comprises at least one of a message display interface, a product object obtaining interface, a chat interface, or a mailbox interface.

9. A video-based interaction apparatus, comprising:
a first display module configured to display a video playback interface, wherein a first video is played on the video playback interface, the first video belonging to a multimedia information stream;
a second display module configured to, in response to a display trigger operation for a target function interface that is performed on the video playback interface, display the target function interface, wherein the target function interface is used to receive an interaction operation for a target function; and
a third display module configured to display a preset video playback window on the target function interface, and continue playback of the first video within the preset video playback window based on playback progress information of the first video, wherein a display area of the preset video playback window is less than that of the target function interface, and the preset video playback window supports switching video playback based on the multimedia information stream.

10. A computer-readable storage medium having stored therein instructions that, when executed on a terminal device, cause the terminal device to implement the method according to any of claims 1 to 8.

11. A video-based interaction device, comprising: a memory, a processor, and a computer program that is stored on the memory and executable on the processor, wherein the processor, when executing the computer program, implements the method according to any of claims 1 to 8.
